# EUROPEAN PATENT SPECIFICATION

(11) **EP 1 387 351 B1**
(45) Date of publication and mention of the grant of the patent: **29.03.2006**
(21) Application number: 03001382.5
(22) Date of filing: 27.01.2003
(51) Int. Cl.: G10L 19/14, G10L 19/04, H04Q 7/30

(54) **Speech encoding device and method having TFO (Tandem Free Operation) function**
Sprachkodiervorrichtung und Verfahren mit TFO (Tandem Free Operation) Funktion
Dispositif et procéde de codage de la parole à fonction TFO (Tandem Free Operation)

(30) Priority: 25.07.2002 JP 2002216937
(43) Date of publication of application: 04.02.2004
(73) Proprietor: FUJITSU LIMITED, Kawasaki-shi, Kanagawa 211-8588 (JP)
(72) Inventor: Sato, Teruyuki, Fujitsu Limited, Kawasaki-shi, Kanagawa 211-8588 (JP); Kanayama, Yasutaka, Fujitsu Kyushu Digit.Techn.Ltd, Fukuoka-shi, Fukuoka 812-0011 (JP)
(74) Representative: HOFFMANN EITLE

(56) References cited:
- EP-A- 1 052 796
- EP-A- 1 168 651
- EP-A- 1 202 251
- US-A- 5 991 716
- US-A1- 2001 044 712
- US-B1- 6 172 974

## Description

### BACKGROUND OF THE INVENTION

### 1. Field of the Invention

The present invention relates to a speech encoding device having a TFO function, and a method.

### 2. Description of the Related Art

In recent years, speech codecs that compress speech data for transmission have come to compress 64-kbps speech data in the telephone speech band to about 4 kbps to 8 kbps for transmission. In particular, in the field of mobile communications, low bit-rate speech codecs have come into use for efficient utilization of bandwidth. In such speech codecs, speech quality degradation due to the accumulation of distortion associated with compression and decompression, especially in the tandem operation of codecs (the configuration hereinafter called the tandem connection), has become a greater issue than before.

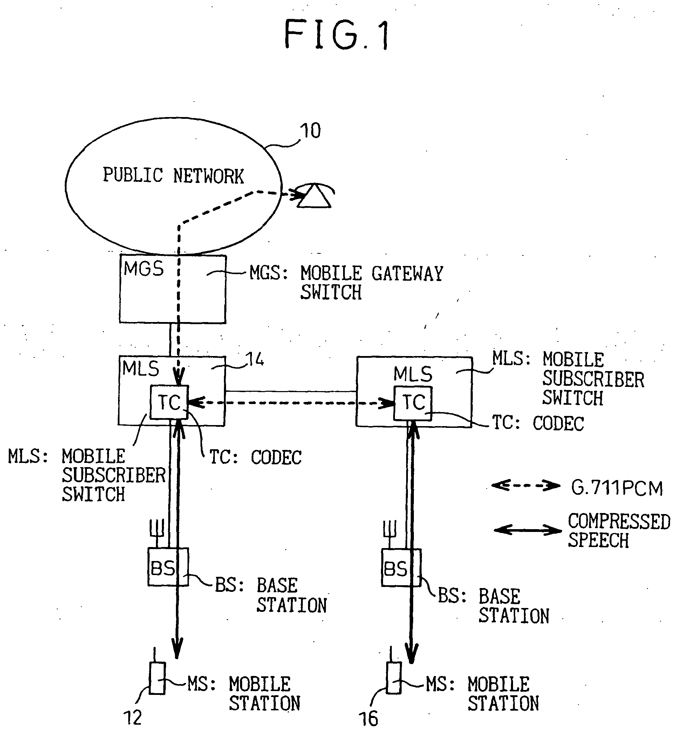

It is said that a method called digital one-link connection, in which data is transmitted end to end in compressed form as it is, is desirable for use with speech codecs. However, in mobile-to-mobile connections, for example, in, the second generation mobile communication systems (such as European GSM, North American PCS, and Japan's PDC), a serial operation called a tandem connection, and not digital one-link connection, occurs. How this occurs will be explained with reference to Figure 1. As a speech codec intervenes in order to connect a mobile unit 12 to a public network 10 in a mobile switching center (MLS) 14, the compressed data is once converted to 64 kbps PCM code even when the destination of the connection is a mobile unit 16. This results in a tandem connection in which the two speech codecs are connected in serial when connecting one mobile unit to the other, and causes degradation in speech quality.

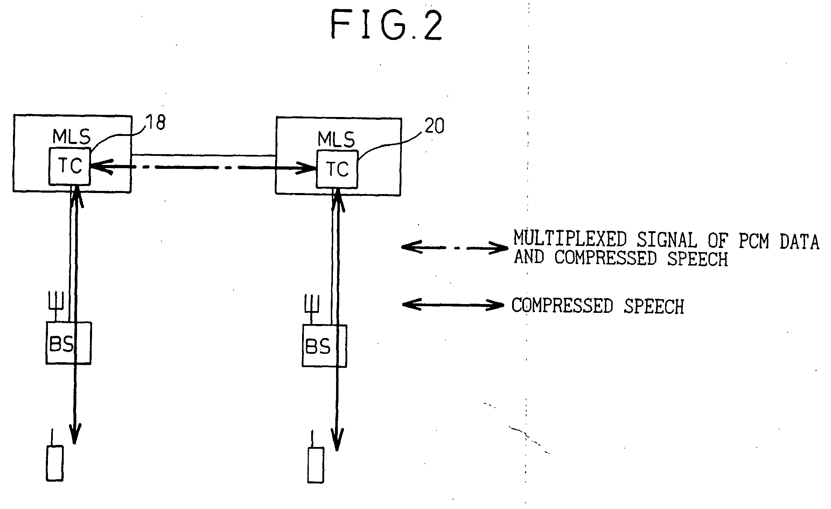

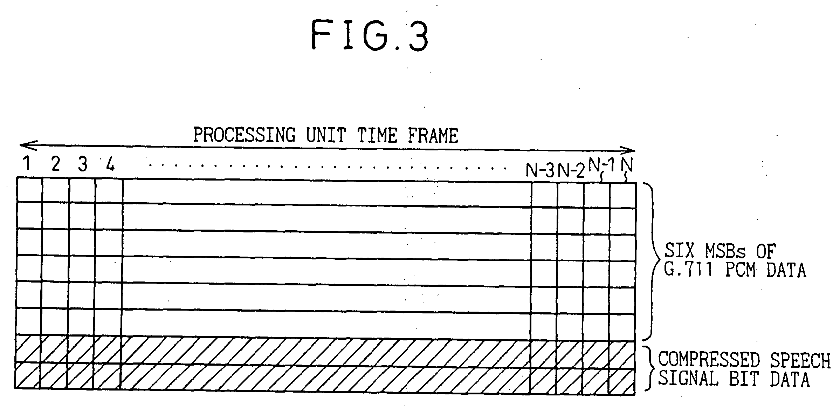

A technique for solving this problem is disclosed in U.S. Patent No. 5991716 or in 3GPP (3rd Generation Partnership Project) Technical Specification TS 28.062. This technique is called Tandem Free Operation (TFO) because the tandem connection of codecs is removed. An overview of this operation is shown in Figure 2. By bit stealing from G.711 PCM data between TCs (Transcoders: codecs) 18 and 20 (the data is obtained by local decoding operations at the TCs), and by mapping compressed speech data thereon, the compressed data from the terminal is passed through without the TCs (codecs) themselves performing re-encoding (re-compression) operations. This achieves a digital one-link between the mobile units. Figure 3 shows the format of the data transmitted between the TCs. In this case, the six MSBs of the PCM data obtained by local decoding operations at the TCs are left unchanged, but the two LSBs are stolen and the compressed speech data bits are embedded therein.

The feature of the above TFO method is that both the PCM data and the compressed speech data are transmitted by multiplexing them together, not transmitting the compressed speech data instead of the PCM data. This enables the speech signal to be transmitted end to end via a digital one-link connection to the remote end even when the remote end is a mobile unit.

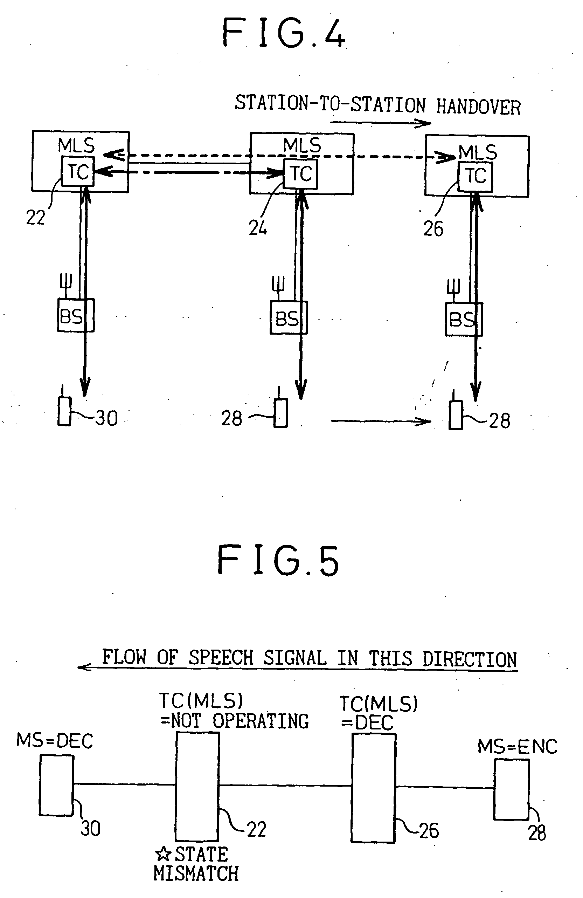

In mobile communications, handover occurs as a mobile terminal moves. As shown in Figure 4, during communication via a TFO connection established between TC 22 and TC 24 that support TFO, for example, if the mobile terminal 28 moves and a handover occurs from the TC 24 to a TFO non-supporting TC 26, the TFO has to be interrupted. To provide for such cases, the TC 22 must also be provided with a means for allowing a fallback from the TFO to the tandem connection, that is, a function for encoding PCM data, received from the TC 26, into compressed speech data so that switching can be made from the compressed data pass-through mode to the encoding mode in the event of a fallback to the tandem connection. Such means is also needed so that, in the event of an increased error rate between the TCs, switching can be made at the receiving TC so as to use PCM data less affected by error. However, the following problem occurs when effecting a fallback to the tandem connection.

In recent codecs, prediction schemes have become an essential technology for achieving a high compression ratio, and it is practiced to predict the present signal from the past received signal by making use of its statistical nature, and to encode only the prediction residual. This prediction works well, provided that the internal state variables are matched between the encoder and decoder. In fact, when a reset is performed during encoding and the resulting compressed speech data is processed by the decoder which is not reset, it can be confirmed that a signal of maximum amplitude may be reproduced in certain cases (conversely, resetting only the decoder will not cause a significant effect on signal reproduction, since the decoder has the robustness that allows reproduction from any point in the encoded data).

As shown in Figure 5, during the TFO operation in which the compressed speech data is allowed to pass through, the encoder of the receiving TC 22 is not operating, so that its internal state is in a floating state. When a fallback to the tandem connection occurs, the encoder of the TC 22 is switched in, and this can cause a problem such as described above in the decoder contained in the mobile unit 30.

One possible method to avoid this problem is to continue encoding, at the TC 22, the speech decoded by the right-hand side TC 26 and thereby to prevent the occurrence of a state mismatch. In another possible method, the encoder is not kept operating at all times, but when it is detected by a suitable means that a tandem fallback should be effected, the encoder starts to operate (while stopping the transmission of the encoded data for a certain period of time) before switching is made to the tandem connection.

However, these methods require that the encoding which involves a large amount of computation be performed during the TFO operation and, therefore, this defeat the purpose of reducing the amount of processing which is a feature of TFO. If the encoder is operated only when necessary, this is no different from operating the encoder at all times, if the worst case is considered, and this also defeats the purpose of reducing the amount of processing.

US 5 991 716 describes a transcoder which prevents tandem coding of speech in a mobile-to mobile call within a mobile communication system uses a speech coding method for reducing transmission rate on the radio path. The transcoder includes a speech coder, which encodes the speech signal into speech parameters for transmission to a mobile station, and decodes the speech parameters received from the mobile station into a speech signal according to the speech coding method, as well as a PCM coder for transmitting an uplink speech signal to and for receiving a downlink speech signal from a PCM interface in the form of PCM speech samples. In addition to the normal operation, the transcoder transmits and receives speech parameters through a PCM interface in a subchannel formed by least significant bits of the PCM speech samples. Thus, it is possible to prevent tandem coding while maintaining the standard PCM interface, and the signalling and services associated thereto.

EP 1168 651 describes how in a digital audio system, a first audio unit has its audio decoder adapted to decode coded digital audio data to get coding parameters including information of frame borders of the audio data and release the decoded digital audio data and coding parameters. A second audio unit which receives the digital audio data and coding parameters has its audio encoder adapted to reencode the digital audio data by using the coding parameters. The re-encoding process by use of the best or highly optimised coding parameters, which have been used for original coding, restores the same state of audio data, and the reduction of coding errors can be expected.

EP 1202251 relates to a voice code conversation apparatus to which voice code obtained by a first voice encoding method is input for converting this voice code to voice code of a second voice encoding method. The apparatus includes a code separating unit for separating, from the voice code based upon the first voice encoding method, codes of a plurality of components necessary to reconstruct a voice signal, code converters for dequantizing the codes of each of the components and then quantizing the dequantized values by the second voice encoding method to thereby generate codes and a code multiplexer for multiplexing the codes output from respective ones of the code converters and transmitting voice code based upon the second voice encoding method.

### SUMMARY OF THE INVENTION

The present invention has been devised to solve the above problem in a speech encoder having a TFO function, and an object of the invention is to provide a speech encoding device and method that can maintain internal state matching, while suppressing an increase in the amount of processing, to provide for the case of a fallback to the tandem connection.

According to the present invention there is provided a speech encoding device as defined in the appended independent claim 1, and a speech encoding method as defined in the appended independent claim 6. Preferred embodiments are defined in the dependent claims.

### BRIEF DESCRIPTION OF THE DRAWINGS

Figure 1 is a diagram for explaining a tandem connection of speech codecs;
Figure 2 is a diagram for explaining TFO;
Figure 3 is a diagram showing the format of data transmitted between TCs in TFO;
Figure 4 is a diagram for explaining a fallback to the tandem connection;
Figure 5 is a diagram for explaining a problem occurring when a fallback to the tandem connection occurs;
Figure 6 is a block diagram of a speech encoding device based on CELP;
Figure 7 is a block diagram of a speech encoding device according to one embodiment of the present invention;
Figure 8 is a diagram for explaining a time difference between a codec processing unit frame and transmitted data;
Figure 9 is a diagram for explaining how time difference information is extracted;
Figure 10 is a block diagram showing one example of a configuration for accomplishing the extraction of the time difference information and the buffering control performed based on the extracted information;
Figure 11 is a diagram for explaining how the amount of delay can be reduced;
Figure 12 is a diagram for explaining the reconstruction of a stochastic signal; and
Figure 13 is a diagram for explaining an example of buffering in an ACELP-based codec.

### DESCRIPTION OF THE PREFERRED EMBODIMENTS

There is provided a speech encoding device comprising: means for receiving non-compressed speech data and first compressed speech data which correspond to the non-compressed speech data and which are generated through compression coding; an encoder for generating second compressed speech data from the non-compressed speech data in a first operation mode; simplified encoding means for supplying part of the first compressed speech data to the encoder and thereby causing the encoder to perform simplified encoding in a second operation mode; and a selector for selecting the first compressed speech data for output in the second operation mode, and for selecting the second compressed speech data for output in the first operation mode.

Preferably, the encoder generates the compressed speech data by code excited linear predictive coding, and the simplified encoding means supplies stochastic code data to the encoder as that part of the compressed speech data.

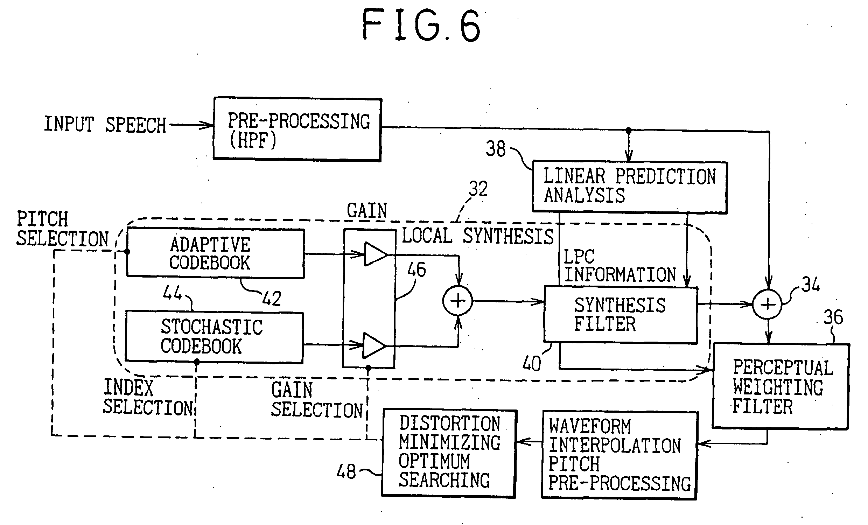

Figure 6 shows the configuration of a speech encoding device based on CELP (Code Excited Linear Prediction). As is well known, in the speech encoding device such as CELP that uses vector quantization, an output of a local synthesis part (decoder) 32 and an input speech vector are added in an adder 34 to compute the error between them, and parameters to be applied to the local synthesis part 32 are determined such that the result of the perceptual weighting applied by a perceptual weighting filter 36 becomes the smallest, the parameters thus determined being the results of the encoding. At the decoding side, the same computations as performed in the local synthesis part 32 are performed by using the above parameters to reconstruct a speech signal close to the input speech.

In the present invention, in the TFO (Tandem Free Operation) mode also, that is, in the operation mode in which the compressed speech data, demultiplexed from the multiplexed signal carrying the PCM data and the compressed speech data, is passed unchanged, the encoder keeps on encoding and compressing the PCM data demultiplexed from the multiplexed signal, thereby maintaining the internal state of the encoder close to that of the encoder that produced the compressed speech data and thus providing for a fallback to the tandem connection; at the same time, to alleviate the burden of the encoder, part of the compressed speech data demultiplexed from the multiplexed signal is used as part of the parameters necessary for the local synthesis 32 performed within the encoder.

The parameters necessary for the local synthesis include: a filter coefficient for an LPC synthesis filter 40, which is obtained by a linear prediction analysis 38 of the input speech; the value of pitch to be supplied to an adaptive codebook 42 which reproduces a voiced sound; an index value to be supplied to a stochastic codebook 44 which reproduces an unvoiced sound; and the gain of the voiced and unvoiced sounds to be supplied to a gain element 46. Any of these parameters may be derived from the compressed speech signal demultiplexed from the multiplexed signal; here, the output of stochastic codebook 44 is a component signal to which prediction cannot be applied, and there is no other way but to search for its index value by using a heuristic algorithm and, besides, there is no stored value as a state variable. Deriving this parameter from the compressed speech signal is therefore the simplest and its effectiveness is the greatest of all of the above parameters. More specifically, when deriving the index value for the stochastic codebook 44 from the data demultiplexed from the multiplexed signal, it is only necessary to switch to that data, and this eliminates the need for searching for the index value by using the heuristic algorithm in a distortion minimizing optimum searching unit 48.

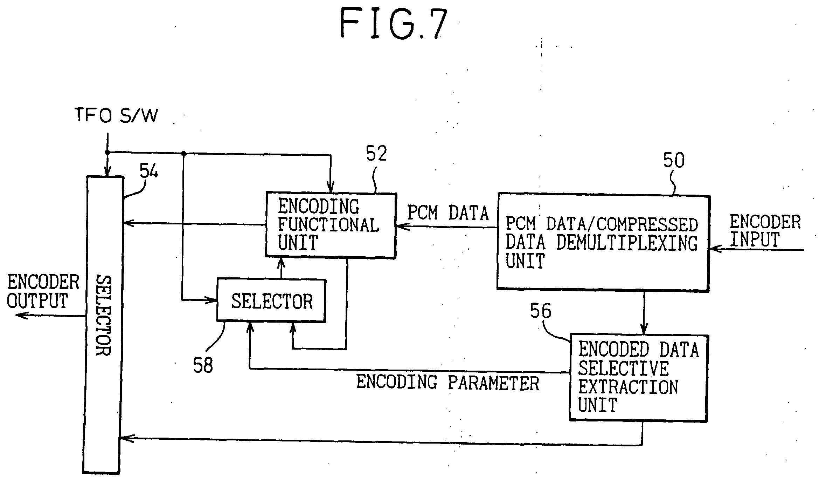

Figure 7 shows the configuration of one embodiment of a speech encoding device based on the above concept according to the present invention.

The input signal to the encoding device is of the format shown in Figure 3 and contains the PCM data decoded at the remote-end TC and the compression-encoded data passed unchanged through the remote-end TC. A PCM data/compressed data demultiplexing unit 50 demultiplexes these two kinds of signals. The demultiplexed PCM data is again encoded and compressed by an encoding functional unit 52 contained in the encoding device. In the event of a fallback to the tandem connection, the output of the encoding functional unit 52 is selected by a selector 54 for output.

On the other hand, during TFO, the demultiplexed compression-encoded data is selected by the selector 54 for output; at this time, part of the data, for example, the index for the stochastic codebook, is extracted by an encoded data selective extraction unit 56. The extracted encoded data is selected by a selector 58 and supplied to the encoding functional unit 52. As a result, during TFO, the encoding functional unit 52 is spared the necessity of performing part of the process, for example, searching for the index value.

When a fallback to the tandem connection occurs, the usual encoding process including a search for the index value is performed. Here, instead of supplying the codebook index to the encoding functional unit 52 during TFO, stochastic code reconstructed from data carrying the feature of the stochastic code may be supplied as will be described later.

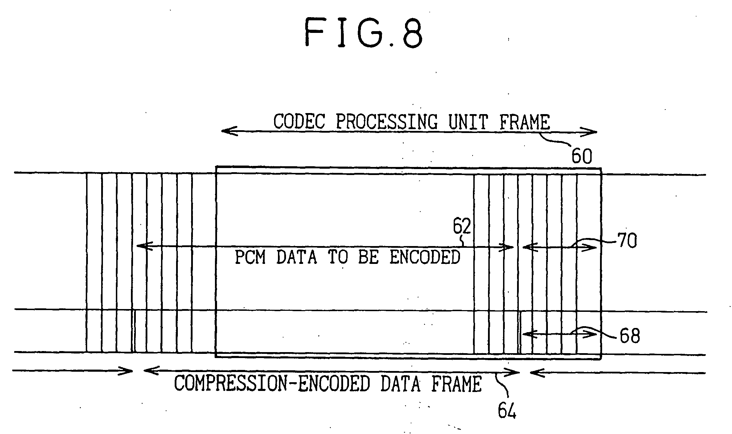

As shown in Figure 8, the phase of the encoding operation in the encoding functional unit 52 (the phase of the processing unit frame 60) does not generally match the phase of the PCM data 62 or the compression-encoded data frame 64 in the multiplexed signal.

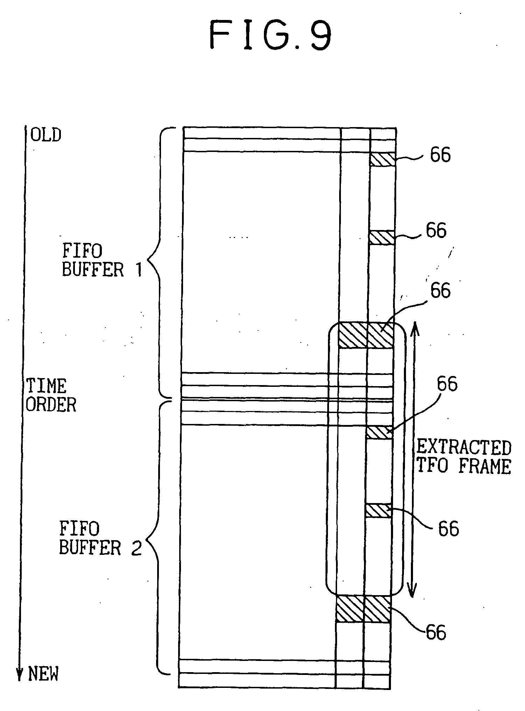

As shown in Figure 9, synchronization patterns 66 are appended to the compressed data embedded in the PCM data. Therefore, a FIFO buffer whose length is twice the length of the codec processing unit frame is provided, as shown in Figure 9, and a compressed data frame is extracted by scanning through the data for the synchronization patterns. The difference between the boundary of the frame thus extracted and the codec processing unit frame is extracted as time difference information 68 (Figure 8). In Figure 8, the trailing end portion of the compression-encoded data remaining to be transmitted after the end of the processing unit frame 60 is stored in the buffer for use in the processing of the next frame. Likewise, as the PCM data also needs to be matched in phase by extracting time difference information 70, the portion corresponding to the time difference is stored in the buffer.

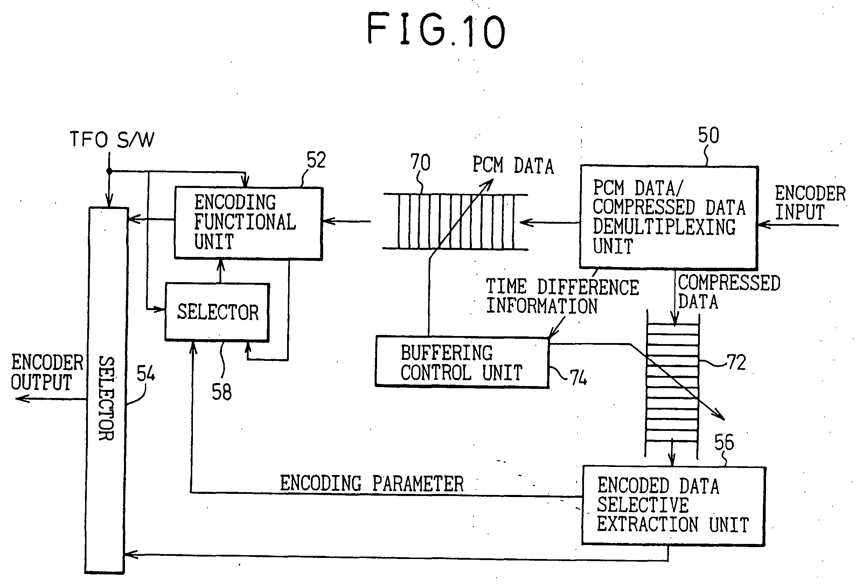

Figure 10 shows an example of how this is accomplished. The PCM data and the compressed data demultiplexed by the PCM data/compressed data demultiplexing unit 50 are stored in buffers 70 and 72, respectively. A buffering control unit 74 extracts the respective time information, and controls the storing and retrieval operations to the respective buffers 70 and 72.

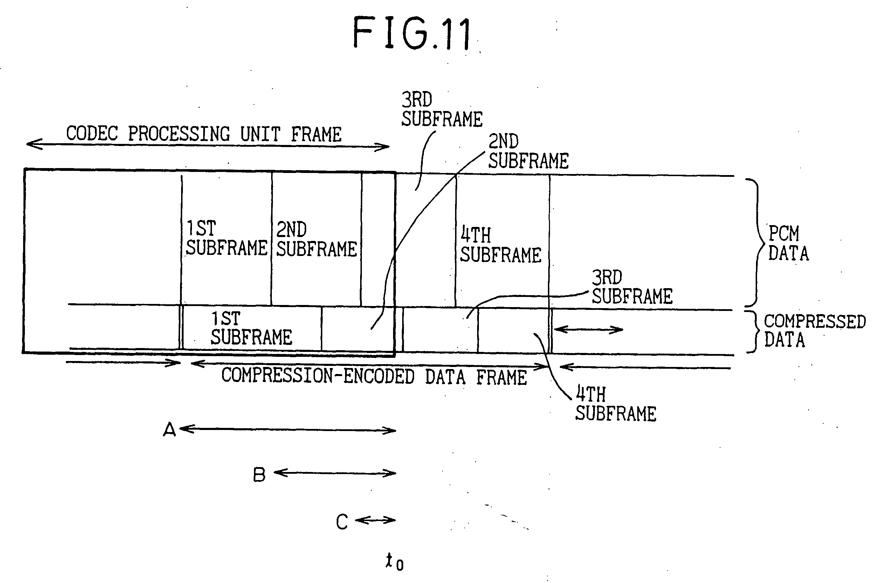

Since the frame boundary and the codec processing unit frame do not generally coincide with each other, a processing delay equivalent to one codec processing unit frame could result, in the worst case. On the other hand, the codec usually has a processing unit called the subframe smaller than the processing unit frame. When the buffering control is performed using the subframe as a unit, the processing delay can be reduced. This will be explained with reference to Figure 11 by assuming that the processing unit frame length is 20 ms and the subframe length is 5 ms.

In the frame-by-frame buffering control so far described, the data in the area indicated by A in Figure 11 are held in the respective buffers at time to which indicates the end of one processing unit frame; therefore, the amount of delay is equal to A. According to TS 28.062, for example, the compressed data frame is also divided into units of subframes; here, if data arrival is detected on a subframe-by-subframe basis, not only the PCM data but the compressed data can also be matched in phase on a subframe-by-subframe basis, eliminating the need for matching the phase for the entire frame, and the amount of delay can thus be reduced. In Figure 11, as the first subframe data is already received at time t₀, this data is not buffered but is used for processing. As a result, the amount of delay can be reduced to B.

Further, the codec has a delay called the algorithm delay; this delay is 5 ms, for example, in the case of the AMR, the standard codec in the third generation mobile communications. This is implemented as a read-ahead buffer in the encoding device, meaning that 5 ms of read-ahead is possible. That is, in Figure 11, at time to the second subframe of the compressed data has not arrived yet, but the second subframe of the PCM data can be processed for encoding; as a result, the amount of delay can be reduced to C.

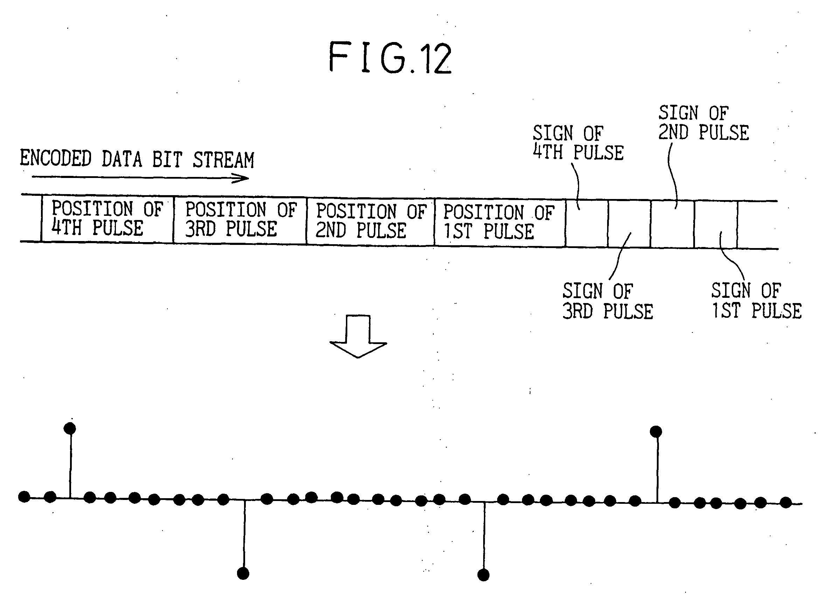

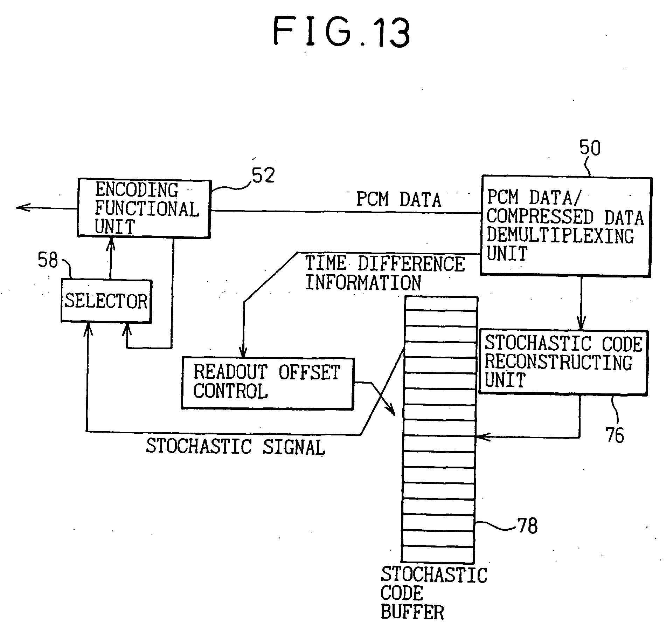

In the case of an ACELP (Algebraic Code Excited Linear Prediction) codec, which is a class of CELP codecs, data indicating the positions and signs of the pulses forming a stochastic signal is transmitted as stochastic codebook data, as shown in Figure 12. Then, as shown in Figure 13, the stochastic signal is reconstructed by a stochastic code reconstructing unit 76, and the reconstructed data is stored in a buffer 78.

As described above, according to the present invention, the internal state matching of the encoder when switching from the TFO mode to the tandem connection can be maintained while suppressing the corresponding increase in the amount of processing.

## Claims

1. A speech encoding device comprising:
means for receiving non-compressed speech data and first compressed speech data which correspond to the non-compressed speech data and which are generated through compression coding;
an encoder (52) for generating second compressed speech data from said non-compressed speech data in a tandem connection mode;
extracting means (56) for supplying part of said first compressed speech data to said encoder (52) for use as part of the parameters necessary thereto and thereby causing said encoder (52) to perform encoding in a tandem free operation mode; and
a selector (54) for selecting said first compressed speech data for output in said tandem free operation mode, and for selecting said second compressed speech data for output in said tandem connection mode.

2. A speech encoding device according to claim 1, wherein said encoder (52) generates said second compressed speech data by code excited linear predictive coding, and
said extracting means (56) supplies stochastic code data to said encoder (52) as part of said compressed speech data.

3. A speech encoding device according to claim 1 or 2, wherein said first compressed speech data is received in the form of a multiplexed signal multiplexed on said non-compressed speech data, and
said speech encoding device further comprises means for demultiplexing (50) said non-compressed speech data and said first compressed speech data from said multiplexed signal.

4. A speech encoding device according to claim 3, further comprising means for buffering (72, 70) said first compressed speech data and said non-compressed speech data, respectively, and wherein
time difference information of said first compressed speech data and said non-compressed speech data with respect to a processing phase of said encoder is extracted during said demultiplexing, and
based on said time difference information, said first compressed speech data and said non-compressed speech data are retrieved from said buffering means.

5. A speech encoding device according to claim 4, wherein reconstructed stochastic code data is buffered as the part of compressed speech data.

6. A speech encoding method comprising the steps of:
receiving non-compressed speech data and first compressed speech data which correspond to the non-compressed speech data and which are generated through compression coding;
generating in an encoder second compressed speech data from said non-compressed speech data in a tandem connection mode;
supplying part of said first compressed speech data to said encoder for use as part of the parameters necessary thereto and thereby causing said encoder to perform encoding in a tandem free operation mode; and
selecting said first compressed speech data for output in said tandem free operation mode, and selecting said second compressed speech data for output in said tandem connection mode.

7. A speech encoding method according to claim 6, wherein said encoder generates said second compressed speech data by code excited linear predictive coding, and
in said tandem free operation mode, stochastic code data is supplied to said encoder as said part of said compressed speech data.

## Patentansprüche

1. Sprachcodiervorrichtung, die folgendes aufweist:
eine Einrichtung zum Empfangen nicht komprimierter Sprachdaten und erster komprimierter Sprachdaten, die den nicht komprimierten Sprachdaten entsprechen und die durch eine Kompressionscodierung erzeugt sind;
einen Codierer (52) zum Erzeugen zweiter komprimierter Sprachdaten aus den nicht komprimierten Sprachdaten in einem Reihenschaltungsmode;
eine Extraktionseinrichtung (56) zum Zuführen eines Teils der ersten komprimierten Sprachdaten zum Codierer (52) zur Verwendung als Teil der Parameter, die dazu nötig sind, und zum Veranlassen **dadurch**, dass der Codierer (52) ein Codieren in einem reihenschaltungsfreien Betriebsmode durchführt; und
einen Selektor (54) zum Auswählen der ersten komprimierten Sprachdaten zur Ausgabe im reihenschaltungsfreien Betriebsmode und zum Auswählen der zweiten komprimierten Sprachdaten zur Ausgabe im Reihenschaltungsmode.

2. Sprachcodiervorrichtung nach Anspruch 1, wobei der Codierer (52) die zweiten komprimierten Sprachdaten durch ein codeerregtes lineares Vorhersagecodieren erzeugt, und
die Extraktionseinrichtung (56) stochastische Codedaten als Teil der komprimierten Sprachdaten zu dem Codierer (52) zuführt.

3. Sprachcodiervorrichtung nach Anspruch 1 oder 2, wobei die ersten komprimierten Sprachdaten in der Form eines multiplexten Signals empfangen werden, das auf die nicht komprimierten Sprachdaten multiplext ist, und
die Sprachcodiervorrichtung weiterhin eine Einrichtung zum Demultiplexen (50) der nicht komprimierten Sprachdaten und der ersten komprimierten Sprachdaten aus dem multiplexten Signal aufweist.

4. Sprachcodiervorrichtung nach Anspruch 3, die weiterhin eine Einrichtung zum Puffern (72, 70) von jeweils den ersten komprimierten Sprachdaten und den nicht komprimierten Sprachdaten aufweist, und wobei
Zeitdifferenzinformation der ersten komprimierten Sprachdaten und der nicht komprimierten Sprachdaten in Bezug auf eine Verarbeitungsphase des Codierers während des Demultiplexens extrahiert wird, und
basierend auf der Zeitdifferenzinformation die ersten komprimierten Sprachdaten und die nicht komprimierten Sprachdaten aus der Puffereinrichtung wiedergewonnen bzw. ausgelesen werden.

5. Sprachcodiervorrichtung nach Anspruch 4, wobei rekonstruierte stochastische Codedaten als der Teil komprimierter Sprachdaten gepuffert werden.

6. Sprachcodierverfahren mit den folgenden Schritten:
Empfangen nicht komprimierter Sprachdaten und erster komprimierter Sprachdaten, die den nicht komprimierten Sprachdaten entsprechen und die durch eine Kompressionscodierung erzeugt sind;
in einem Codierer Erzeugen zweiter komprimierter Sprachdaten aus den nicht komprimierten Sprachdaten in einem Reihenschaltungsmode;
Zuführen eines Teils der ersten komprimierten Sprachdaten zu dem Codierer zur Verwendung als Teil der Parameter, die dazu nötig sind, und **dadurch** Veranlassen, dass der Codierer ein Codieren in einem reihenschaltungsfreien Betriebsmode durchführt; und
Auswählen der ersten komprimierten Sprachdaten zur Ausgabe in dem reihenschaltungsfreien Betriebsmode und Auswählen der zweiten komprimierten Sprachdaten zur Ausgabe im Reihenschaltungsmode.

7. Sprachcodierverfahren nach Anspruch 6, wobei der Codierer die zweiten komprimierten Sprachdaten durch eine codeerregte lineare Vorhersagecodierung erzeugt, und
im reihenschaltungsfreien Betriebsmode stochastische Codedaten als der Teil der komprimierten Sprachdaten zu dem Codierer zugeführt werden.

## Revendications

1. Dispositif de codage de la parole comprenant :
des moyens pour recevoir des données vocales non compressées et des premières données vocales compressées qui correspondent aux données vocales non compressées et qui sont générées par codage de compression ;
un codeur (52) pour générer des deuxièmes données vocales compressées à partir desdites données vocales non compressées dans un mode de connexion tandem ;
des moyens d'extraction (56) pour délivrer une partie desdites premières données vocales compressées au dit codeur (52) pour l'utilisation comme une partie des paramètres nécessaires à celui-ci et en forçant ainsi ledit codeur (52) à effectuer un codage dans un mode de fonctionnement libre tandem ; et
un sélecteur (54) pour sélectionner lesdites premières données vocales compressées pour la sortie dans ledit mode de fonctionnement libre tandem et pour sélectionner lesdites deuxièmes données vocales compressées pour la sortie dans ledit mode de connexion tandem.

2. Dispositif de codage de la parole selon la revendication 1, dans lequel ledit codeur (52) génère lesdites deuxièmes données vocales compressées par codage prédictif linéaire excité par code, et
lesdits moyens d'extraction (56) délivrent des données de code stochastique au dit codeur (52) comme une partie desdites données vocales compressées.

3. Dispositif de codage de la parole selon la revendication 1 ou 2, dans lequel lesdites premières données vocales compressées sont reçues sous la forme d'un signal multiplexé multiplexé sur lesdites données vocales non comprimées, et
ledit dispositif de codage de la parole comprend en outre des moyens pour démultiplexer (50) lesdites données vocales non compressées et lesdites premières données vocales compressées à partir dudit signal multiplexé.

4. Dispositif de codage de la parole selon la revendication 3, comprenant en outre des moyens pour mettre en mémoire tampon (72, 70) lesdites premières données vocales compressées et lesdites données vocales non compressées, respectivement, et dans lequel
une information de différence de temps desdites premières données vocales compressées et desdites données vocales non compressées par rapport à une phase de traitement dudit codeur sont extraites durant ledit démultiplexage, et
sur la base de ladite information de temps, lesdites premières données vocales compressées et lesdites données vocales non compressées sont récupérées à partir desdits moyens de mise en mémoire tampon.

5. Dispositif de codage de la parole selon la revendication 4, dans lequel des données de code stochastique reconstruites sont mises en mémoire tampon comme la partie des données vocales compressées.

6. Procédé de codage de la parole comprenant les étapes consistant à :
recevoir des données vocales non compressées et des premières données vocales compressées qui correspondent aux données vocales non compressées et qui sont générées par codage de compression ;
générer dans un codeur des deuxièmes données vocales compressées à partir desdites données vocales non compressées dans un mode de connexion tandem ;
délivrer une partie desdites premières données vocales compressées au dit codeur pour l'utilisation comme une partie des paramètres nécessaires à celui-ci et forcer ainsi ledit codeur à effectuer un codage dans un mode de fonctionnement libre tandem ; et
sélectionner lesdites premières données vocales compressées pour la sortie dans ledit mode de fonctionnement libre tandem et sélectionner lesdites deuxièmes données vocales compressées pour la sortie dans ledit mode de connexion tandem.

7. Procédé de codage de la parole selon la revendication 6, dans lequel ledit codeur génère lesdites deuxièmes données vocales compressées par codage prédictif linéaire excité par code, et
Dans ledit mode de fonctionnement libre tandem, des données de code stochastique sont délivrées au dit codeur comme ladite partie desdites données vocales compressées.
